# EUROPÄISCHE PATENTANMELDUNG

(11) **EP 1 642 935 A1**
(43) Veröffentlichungstag der Anmeldung: **05.04.2006**
(21) Anmeldenummer: 05021229.9
(22) Anmeldetag: 29.09.2005
(51) Int. Cl.: C08L 95/00, C09D 195/00, E01C 7/00

(54) **Bitumenhaltiges Bindemittel**

(30) Priorität: 29.09.2004 DE 102004047793
(71) Anmelder: Hänel-Labryga,, Carsten, 22309 Hamburg (DE)
(72) Erfinder: Hänel-Labryga,, Carsten, 22309 Hamburg (DE)
(74) Vertreter: Ahrens, Gabriele

(57) **Zusammenfassung**

Die vorliegende Erfindung betrifft ein bitumenhaltiges Bindemittel, wie es insbesondere für die Oberflächenbehandlung im Straßenbau eingesetzt wird, das eine Bitumenbasis sowie ein reaktives Fluxmittel umfasst, wobei das Abbinden des Bindemittels durch Aushärten des reaktiven Fluxmittels erfolgt.

## Beschreibung

Die vorliegende Erfindung betrifft ein bitumenhaltiges Bindemittel, wie es üblicherweise im Straßenbau eingesetzt werden kann.

Bitumen und bitumenhaltige Bindemittel werden im Straßenbau zur Herstellung von Asphaltbelägen eingesetzt. Diese werden auf die Straßenunterlage als Schutz aufgebracht, zum Beispiel vor dem Eindringen von Wasser und anderen Einflüssen aus Witterung und Verkehr. In der Herstellung von Asphaltbelägen wird unter Anderem unterschieden zwischen Asphaltsplittbelägen, deren Herstellung auch als Oberflächenbehandlung bezeichnet wird, und Asphaltmischsystemen.

Bei der Oberflächenbehandlung wird zunächst eine Schicht aus bitumenhaltigen Bindemittel auf die Straßenunterlage aufgebracht und anschließend Split aufgestreut. Oberflächenbehandlungen können zum Beispiel mit einfacher- und doppelter Abstreuung erfolgen, oder als doppelte Oberflächenbehandlung. Die aufgestreute Gesteinskörnung wird dann beispielsweise mit einer Gummiradwalze angedrückt und der Überschuss mit einer geeigneten Saugkehrmaschine entfernt. Anders als bei der Oberflächenbehandlung wird bei Asphaltmischsystemen das bitumenhaltige Bindemittel und der Split miteinander vermischt und zusammen auf die Straßenunterlage aufgebracht. Bei der Auswahl der Baustoffe, wie Gesteinskörnung und bitumenhaltiges Bindemittel sowie der Einsatzmengen sind die zuvor genannten Einflüsse zu berücksichtigen.

Da die Viskosität von Bitumen und bitumenhaltigen Bindemittel hoch ist, muss diese für den Auftrag entsprechend erniedrigt werden. Ein Verfahren besteht in dem Aufschmelzen des Ausgangsmaterials, anschließendem heißen Auftragen und erstarren lassen. Hierbei handelt es sich jedoch um ein energieintensives Verfahren.

Bekannte bitumenhaltige Bindemittel für Oberflächenbehandlungen im Heißverfahren enthalten neben Bitumen hochsiedende Kohlenwasserstoffverbindungen als Fluxmittel. Die Anwendungstemperatur dieser als Fluxbitumen bezeichneten Bindemittel beträgt mindestens 160 °C mit dem Nachteil, dass dabei ein Teil der im Bindemittel vorhandenen Kohlenwasserstoffverbindungen verdunstet und dadurch eine Belastung sowohl der Umwelt als auch der Arbeiter darstellt.

Zur Lösung wird in EP 0 568 757 vorgeschlagen, die hochsiedenden Kohlenwasserstoffverbindungen durch pflanzliche / oder tierische Öle und / oder Fette wie Leinöl, Rapsöl sowie aus derartigen Stoffen gebildeten Firnissen zu ersetzen. Weiter wird beschrieben, dass keine Dämpfe von stark riechenden oder giftigen Kohlenwasserstoffverbindungen auftreten.

Für Kaltverfahren wird ebenfalls Fluxbitumen eingesetzt, das neben Bitumen als Hauptinhaltsstoff Fluxmittel enthält. Als Fluxmittel sind hier ebenfalls Mineralölprodukte bekannt, wie zum Beispiel Benzin verschiedener Siedebereiche. Auch hier besteht das Problem der Umweltbelastung, da die Mineralöle durch Regenwasser ausgewaschen werden können und damit den Boden beeinträchtigen bzw. durch Verdunstung die Luft belasten.

Ähnlich wie in EP 0 568 757 für Heißverfahren, wird in DE 195 19 539 vorgeschlagen auch für Kaltverfahren das Fluxmittel auf Mineralölbasis durch ein pflanzliches Öl zu ersetzen, wobei als ausschließliches Beispiel Rapsöl oder ein Rapsölderivat genannt ist.

Gefluxte Bindemittel für die Kaltverarbeitung, ob auf Mineralölbasis oder organischer Basis, härten nur langsam aus, so dass der Belag noch lange nach der Verarbeitung weich und damit wenig belastbar ist. Zudem erfolgt die Aushärtung unter anderem durch partielle destillative Vorgänge, dass heißt, partielle Verdunstung des mineralölstämmigen Fluxmittels. Derartige destillative Vorgänge sind abhängig von der Witterung sowie der Umgebungstemperatur und damit nur in einem geringen Maße steuerbar.

Zur Erhöhung der Aushärtgeschwindigkeit von mit Mineralölprodukten gefluxten Bindemitteln wird in dem Gebrauchsmuster DE 297 08 419 vorgeschlagen, herkömmlichen, mit Mineralölprodukten gefluxten Bindemitteln vor der Verarbeitung einen Reaktivzusatz zuzusetzen, der eine reaktive Aushärtung bewirkt und damit den Abbindvorgang beschleunigt. Als Beispiele für geeignete Reaktivzusätze werden organische und anorganische Pulver und Flüssigkeiten genannt, wie Chelatkomplexbildner, Säureanhydride, mehrwertige Alkohole und Carbonsäuren, Fettamine, anorganische Salze ein- und mehrwertiger Kationen und Anionen, Portlandzement, Schnell- oder Spezialzemente, Kalk oder Gips, Dolomit, Flugasche und Schlacken, Gläser und Wasserglas, Kieselgele und Alaune.

Zwar lassen sich hiermit die Aushärtzeiten verkürzen, dennoch bleibt das Problem des Austrags der Mineralöle, die als Fluxmittel verwendet werden, in die Umwelt.

Das Nachhärteverhalten von bitumenhaltigen Bindemitteln wird durch die Aushärtegeschwindigkeit und den Aushärtegrad, das heißt die erzielbare Härte des fertigen Straßenbelags, wesentlich bestimmt.
Je nach den Begebenheiten vor Ort, wie Jahreszeit des Auftrags sowie voraussichtliche Verkehrsbeanspruchung der zu erstellenden Straße können die Anforderungen stark variieren, die an das eingesetzte bitumenhaltige Bindemittel gestellt werden.
Beispielsweise hängt das Nachhärteverhalten von den Umgebungsbedingungen während der Zeit des Auftrags ab, wie Temperatur, Feuchtigkeit etc., die je nach Jahreszeit naturgemäß stark unterschiedlich sein können. Umgebungsbedingungen, wie Temperatur und Feuchtigkeit beeinflussen die Aushärtegeschwindigkeit maßgeblich, sodass die individuelle Aushärtegeschwindigkeit des bitumenhaltigen Bindemittels an die jeweils während des Auftrags herrschenden Umgebungsbedingungen angepasst werden sollte. Des Weiteren ist es wünschenswert, die erzielbare Härte des fertigen Straßenbelags an die Beanspruchung der Straße anzupassen. So werden an einem fertigen Straßenbelag in einer Wohngegend andere Anforderungen gestellt, wie an den für eine vielbefahrene Schnellstraße. Wiederum andere Anforderungen werden an einen Belag für Straßen mit geringfügiger Verkehrsbelastung gestellt.

Es war bekannt, dass Abbindeverhalten von bitumenhaltigen Bindemitteln über das Verhältnis Bitumen: Fluxmittel einzustellen, das heißt über den Gehalt des Fluxmittels im Gesamtbindemittel.

Eine Anpassung des Abbindeverhaltens an die herrschenden Bedingungen ist insbesondere bei Oberflächenbehandlungen von Bedeutung. Wie bereits ausgeführt wird hierbei zunächst ein vergleichsweise dünner Belag aus bitumenhaltigen Bindemittel auf den Straßenunterbau aufgebracht. Insbesondere bei niedrigen Umgebungstemperaturen ist hierbei sicherzustellen, dass der Belag nicht vorzeitig erstarrt und die erforderlichen Verarbeitungseigenschaften beibehält.
So ist bei niedrigen Umgebungstemperaturen ein hoher Fluxmittelanteil erforderlich, um eine ausreichende Benetzung der eingesetzten Mineralstoffe, wie des Splits, sowie das gleichmäßige Verlaufen des bitumenhaltigen Bindemittels auf dem Untergrund sicherzustellen.

Andererseits ist insbesondere für hochbelastete Straßen, das heißt für Straßen mit einer hohen Verkehrsdichte, hohem Schwerlastverkehr oder Straßen mit starker Scherbelastung durch beispielsweise enge Kurvenradien, der Fluxmittelanteil niedrig zu wählen, um die erforderlichen Gebrauchseigenschaften wie ausreichende Härte zu erzielen. Straßenbeläge mit hohem Fluxmittelanteil sind jedoch verhältnismäßig weich, wobei der Erweichungspunkt mit Zunahme des Fluxmittelanteils sinkt. Ein niedriger Erweichungspunkt bedeutet aber, dass der Straßenbelag bei höheren Temperaturen wie sie im Frühjahr oder im Sommer herrschen, schnell erweicht.
Diese gegensätzlichen Anforderungen an die Verarbeitungseigenschaften einerseits und Gebrauchseigenschaften andererseits haben zur Folge, dass der Herstellungszeitraum für Asphaltbeläge, insbesondere für Asphaltsplittbeläge, saisonal auf einen Zeitraum von April bis September beschränkt ist. Da in diesem Zeitraum die Temperaturen im Allgemeinen vergleichsweise hoch sind, kann der Fluxmittelanteil gering gehalten werden, sodass der gewünschte höhere Erweichungspunkt erhalten werden kann.

Es besteht daher ein Bedarf nach einem bitumenhaltigen Bindemittel, das eine für die Verarbeitung ausreichend niedrige Viskosität aufweist und dennoch nach dem Auftrag schnell auszuhärten vermag, ohne dass jedoch eine Verdunstung und damit Freisetzen von Komponenten an die Umgebung eintritt.

Weiter besteht ein Bedarf nach einem bitumenhaltigen Bindemittel, bei dem vorteilhafter weise das Nachhärteverhalten wie Aushärtegeschwindigkeit und Aushärtegrad an die jeweiligen Umgebungsbedingungen angepasst werden kann, ohne Nachteile bei einer Eigenschaft beziehungsweise Kompromisse in Kauf nehmen zu müssen.
Gemäß einer bevorzugten Ausführungsform war es Aufgabe der vorliegenden Erfindung ein bitumenhaltiges Bindemittel zur Verfügung zu stellen, das auch bei niedrigen Temperaturen von ≤ 10 °C verarbeitet werden kann, und dennoch ausgezeichnete Verarbeitungseigenschaften einerseits und Gebrauchseigenschaften andererseits aufweist, sodass der Einbauzeitraum über die übliche Zeitspanne von April bis September hinaus verlängert werden kann.

Ein weiterer wesentlicher Aspekt der vorliegenden Erfindung ist es, den Anteil an erforderlichen Fluxmitteln in einem bitumenhaltigen Bindemittel ohne Beeinflussung der erforderlichen Gebrauchseigenschaften verringern zu können, um so den Verbrauch von Rohstoffen zu reduzieren. Eine Verringerung von einzusetzenden Rohstoffen und die dadurch erzielte Schonung von Rohstoffressourcen ist im Hinblick auf eine umweltschonende Anwendung heutzutage ein maßgebliches Ziel.

Erfindungsgemäß wird diese Aufgabe durch ein bitumenhaltiges Bindemittel gelöst, das eine Bitumenbasis und ein reaktives Fluxmittel umfasst, das ausgewählt ist unter einem Öl, das als Cashew Nutshell Liquid (CNSL) bekannt ist, sowie von daraus gewinnbaren Komponenten wie Cardol und Cardanol.

Für die vorliegende Erfindung bedeutet "reaktives Fluxmittel", dass das Fluxmittel mit sich selbst und / oder einer anderen Komponente, die in dem Bindemittel vorliegt, reagiert und aufgrund dieser Reaktion die Aushärtung des bitumenhaltigen Bindemittels bewirkt.

Erfindungsgemäß wird damit ein Fluxmittel eingesetzt, dass nicht nur der Bitumenbasis eine für die Verarbeitung ausreichend niedrige Viskosität verleiht, sondern gleichzeitig mit sich selbst und / oder einer anderen in dem Bindemittel vorliegenden Komponente reaktiv ist und aushärtet. Aufgrund der Reaktion wird das reaktive Fluxmittel in dem Bindemittel fest gebunden, so dass kein oder nahezu kein Austrag in die Umwelt erfolgt, wie zum Beispiel durch Auswaschung oder Verdunstung.

Die Bindung des reaktiven Fluxmittels in dem bitumenhaltigen Bindemittel kann chemischer oder physikalischer Natur sein oder auch beides.

Es wird angenommen, dass die Reaktion des erfindungsgemäß eingesetzten Fluxmittels unter Einfluss von Luftsauerstoff erfolgt.
Für die Anwendung wird das erfindungsgemäße bitumenhaltige Bindemittel großflächig und im Vergleich zu der erzielten Oberfläche in verhältnismäßig dünner Schicht aufgetragen. Es wird angenommen, dass die erhaltene große Oberfläche einen für die Reaktion ausreichenden Zutritt von Luftsauerstoff ermöglicht.

Diese Annahme wird durch die Beobachtung unterstützt, dass in den Tanks, in denen das bitumenhaltige Bindemittel gelagert wird, keine oder im wesentlichen keine Reaktion auftritt. In den Lagertanks ist einerseits der Luftzutritt begrenzt, sowie die Oberfläche des bitumenhaltigen Bindemittels, die möglicherweise vorhandener Luft ausgesetzt ist, außerordentlich klein.
Der Oberflächenanteil in einem Tank wie er üblicherweise zur Lagerung von bitumenhaltigen Bindemittel eingesetzt wird, kann beispielsweise 20 m³ betragen. Die selbe Menge bitumenhaltiges Bindemittel im aufgetragenen Zustand ergibt eine Oberfläche von 20.000 m². Dieses Beispiel dient zur Erläuterung des vorstehend angegebenen Sachverhalts.

Hierdurch ist sichergestellt, dass das erfindungsgemäße bitumenhaltige Bindemittel mit reaktiven Fluxmittel erst im aufgetragenen Zustand aushärtet und eine vorzeitige Aushärtung ganz oder weitgehend vermieden werden kann.

Bei Bedarf kann dem Tank jedoch ein Inertgas wie Stickstoff zugesetzt werden, um die Möglichkeit einer vorzeitigen Reaktion auszuschließen.

Prinzipiell kann für die vorliegende Erfindung jede beliebige Bitumenbasis eingesetzt werden, wie sie insbesondere für Straßenbauzwecke geeignet ist. Beispiele hierfür sind Destillationsbitumen unterschiedlicher Weichheitsgrade und modifizierte Bitumen, wie polymermodifiziertes Bitumen, wachsmodifiziertes Bitumen, thermoplastmodifiziertes Bitumen, und Gummibitumen.

Weiter können für die vorliegende Erfindung als Bitumenbasis neben dem vorstehend genannten Bitumen auch carbostämmige Bindemittel wie Peche sowie paraffinreiche Destillationsrückstände der Rohöldestillation und andere Bitumen, wie sie für den Straßenbau eingesetzt werden können, Verwendung finden.

Je nach Bedarf und Einsatzzweck können dem erfindungsgemäßen bitumenhaltigen Bindemittel übliche Additive zugesetzt werden, wie zum Beispiel Sikkative oder andere vernetzungsfördernde Stoffe, haftverbessernde Mittel wie Fettamine oder Mittel zur Verbesserung der rheologischen Eigenschaften, wie verschiedene Polymere wie zum Beispiel Elastomere, thermoplastische Polymere, etc.

Erfindungsgemäß wird als reaktives Fluxmittel ein Öl eingesetzt, das als Cashew Nutshell Liquid (CNSL) bekannt ist, sowie daraus gewinnbare Komponenten wie Cardol oder Cardanol.

Es versteht sich, dass die erfindungsgemäß eingesetzten Komponenten des CNSL wie Cardol und Cardanol auch aus einer anderen Quelle stammen können. Beispielsweise können synthetisch hergestellte Verbindungen eingesetzt werden.

Aufgrund der niedrigen Viskositäten der aus dem CNSL gewonnenen Komponenten Cardol und Cardanol ist im allgemeinen eine deutliche Reduzierung des eingesetzten Fluxmittels gegenüber herkömmlicherweise verwendeten Fluxmitteln möglich. So hat sich gezeigt, dass im allgemeinen ein Gehalt von 0,5 bis 25 Masse-% (bezogen auf das einsatzfertige bitumenhaltige Bindemittel) ausreichend ist.

Damit ist in der Regel eine Reduzierung der eingesetzten Fluxmittel um 20 bis 25 Masse-% (bezogen auf das eingesetzte Fluxmittel) gegenüber üblicherweise verwendeten mineralölstämmigen Fluxmitteln möglich.

Die damit mögliche Reduzierung an Fluxmittel trägt zur Schonung von Rohstoffrecourcen bei.

Gemäß einer bevorzugten Ausführungsform enthält das erfindungsgemäße bitumenhaltige Bindemittel einfach oder mehrfach ungesättigte Fettsäuren und/oder Öle, die diese enthalten.

Beispiele für derartige Fettsäuren sind Ölsaure, Linolsäure, Linolensäure und Elaeostearinsäure. Diese kommen in der Natur in Ölen wie zum Beispiel Raps-, Soja-, Diestel-, Lein- oder Holzöl vor.

Geeignete Fettsäuregehalte sind 0,5 bis 10 Masse % bezogen auf das einsatzfertige bitumenhaltige Bindemittel.
Der Gehalt an ungesättigten Fettsäuren kann zum Beispiel durch die Jodzahl bestimmt werden.

Durch Zusatz dieser Fettsäuren zu dem erfindungsgemäßen bitumenhaltigen Bindemittel oder durch partiellen Austausch des reaktiven Fluxmittels durch diese Fettsäuren kann der Aushärtegrad sowie die Geschwindigkeit der Aushärtung des erfindungsgemäßen Bindemittels gezielt gesteuert und damit individuell an die jeweiligen Anwendungsbedingungen angepasst werden.

So hat sich zum Beispiel gezeigt, dass der Aushärtegrad sowie die Geschwindigkeit der Aushärtung durch teilweisen Austausch von CNSL, Cardanol und Cardol durch einfach oder mehrfach ungesättigte Fettsäuren variiert werden können. Durch einfache Einstellung des Verhältnisses von reaktiven Fluxmittel zu Fettsäure können damit erfindungsgemäß der Aushärtegrad und die Aushärtegeschwindigkeit je nach Bedarf und Umgebungsbedingungen eingestellt werden.

Bei dem erfindungsgemäßen Bindemittel können die Gebrauchs- und die Verarbeitungseigenschaften durch Variation der Fluxmittelzusammensetzung gesteuert werden und nicht über das Verhältnis Bindemittel zu Fluxmittel. Das Verhältnis Bindemittel zum Fluxmittel kann deshalb für die jeweilige Anwendung optimal gewählt werden.

Prinzipiell kann das erfindungsgemäße bitumenhaltige Bindemittel für beliebige Verfahren zur Herstellung von Asphaltbelägen eingesetzt werden. Es eignet sich für Heißverfahren ebenso wie Kaltverfahren.
Beispiele für Heißverfahren sind Oberflächenbehandlungen (Asphaltsplittverfahren) und Asphaltmischsystemverfahren, wobei Oberflächenbehandlungen bevorzugt sind. Beispiele für ein Kaltverfahren ist das Emulsionsverfahren, wofür das erfindungsgemäße bitumenhaltige Bindemittel als Bitumenemulsion beziehungsweise als polymermodifizierte Bitumenemulsionen oder als polymermodifizierte Fluxbitumenemulsionen, insbesondere für Oberflächenbehandlungen, eingesetzt werden kann.

Für die Herstellung der Emulsion werden nach bekannten Verfahren für den Prozess der Emulgierung zum Beispiel Fettamine, quaternäre Ammoniumsalze oder Amidoamine eingesetzt, welche in einer wässrigen Phase mit einer Säure, wie zum Beispiel Salzsäure, verseift werden. Der Prozess der Emulgierung erfolgt in Abhängigkeit des eingesetzten bitumenhaltigen Bindemittels bei einer Temperatur von 120 bis 145 °C. Die Einsatzkonzentration des erfindungsgemäßen bitumenhaltigen Bindemittels beträgt üblicherweise 35 bis 75 Masseprozent bezogen auf die fertige Emulsion. Die Verarbeitungstemperatur von bitumenhaltigen Emulsionen liegt im Allgemeinen bei ca. 60 bis 80 °C, wobei die Temperatur je nach Anteil an bitumenhaltigen Bindemittels in der Emulsion variieren kann. So ist die Verarbeitungstemperatur in der Regel umso geringer, je niedriger der Anteil an bitumenhaltigen Bindemittel in der Emulsion ist.

Bei den erfindungsgemäßen Emulsionen handelt es sich um kationische Bitumenemulsionen, welche den herkömmlichen technischen Regelwerken entsprechen.

Die vorliegende Erfindung ermöglicht zusätzlich zu einer umgebungsschonenden Verarbeitung eine gezielte Steuerung der technisch notwendigen Nachhärtung des bitumenhaltigen Bindemittels unter Berücksichtigung der für die jeweilige Jahreszeit erforderlichen Verarbeitungseigenschaften und der Verkehrsbelastung durch einfache Anpassung der Fluxmittelzusammensetzung.

Nachstehend werden einige Beispiele für Zusammensetzungen des erfindungsgemäßen bitumenhaltigen Bindemittels aufgeführt.

Soweit nicht anders angegeben beziehen sich die Gehaltsbereiche auf Masse-% bezogen auf die jeweils angegebene Zusammensetzung.

### 1. Fluxbitumen für Oberflächenbehandlungen

| | |
|---|---|
| Bitumen, Nadelpenetration 50 - 2201/10mm | 74 bis 99,4 Masse-% |
| CNSL (Cashew Nutshell Liquid) | 0,5 bis 25 Masse-% |
| Haftmittel (zum Beispiel auf Basis Fettamin) | 0,1 bis 1,0 Masse-% |

### 2. Polymermodifiziertes Fluxbitumen für Oberflächenbehandlungen

| | |
|---|---|
| Polymermodifiziertes Bitumen, Nadelpenetration 20 - 200 1/10mm | 74 bis 99,4 Masse-% |
| CNSL (Cashew Nutshell Liquid) | 0,5 bis 25 Masse-% |
| Haftmittel (auf Basis Fettamin) | 0,1 bis 1,0 Masse-% |

### 3. Polymermodifiziertes Fluxbitumen für Oberflächenbehandlungen mit einer reduzierten Einsatzmenge an Fluxöl

| | |
|---|---|
| Polymermodifiziertes Bitumen, Nadelpenetration 20 - 200 1/10mm | 81 bis 99,4 Masse-% |
| Cardanol | 0,5 bis 18 Masse-% |
| Haftmittel (auf Basis Fettamin) | 0,1 bis 1,0 Masse-% |

### 4. Polymermodifiziertes Fluxbitumen für Oberflächenbehandlungen. Beispiel für Steuerung der Aushärtung durch Zusatz von Rapsöl

| | |
|---|---|
| Polymermodifiziertes Bitumen, Nadelpenetration 20 - 200 1/10mm | 79 bis 98,9 Masse-% |
| Cardanol | 0,5 bis 10 Masse-% |
| Haftmittel (auf Basis Fettamin) | 0,1 bis 1,0 Masse-% |
| Rapsöl | 0,5 bis 10 Masse-% |

Durch den Zusatz des Rapsöls konnte eine Verringerung des Aushärtegrades um 10 °C bezogen auf den Erweichungspunkt "Ring und Kugel" gemäß DIN EN 1427 gegenüber Beispiel 3 erzielt werden.

### 5. Polymermodifiziertes Fluxbitumen für Oberflächenbehandlungen. Steuerung der Aushärtung durch Zusatz von Leinöl.

| | |
|---|---|
| Polymermodifiziertes Bitumen, Nadelpenetration 20 - 200 1/10mm | 79 bis 98,9 Masse-% |
| Cardanol | 0,5 bis 10 Masse-% |
| Leinöl | 0,5 bis 10 Masse-% |
| Haftmittel (auf Basis Fettamin) | 0,1 bis 1,0 Masse-% |

Durch den Zusatz von Leinöl konnte eine Verringerung des Aushärtegrades um 5 °C bezogen auf den Erweichungspunkt "Ring und Kugel" gemäß DIN EN 1427 gegenüber Beispiel 3 erzielt werden.

Die erfindungsgemäßen bitumenhaltigen Bindemittel mit reaktiven Fluxmittel eignen sich prinzipiell für im Straßenbau übliche Oberflächenbehandlungen wie zum Beispiel mit einfacher und doppelter Abstreuung oder als doppelte Oberflächenbehandlung.

Nachstehend werden Anwendungsbeispiele für Oberflächenbehandlungen mit den erfindungsgemäßen Zusammensetzungen gegeben:
1. Einfache Oberflächenbehandlung

| | |
|---|---|
| Polymermodifiziertes Fluxbitumen gemäß einem der vorhergehenden Beispiele 1 bis 5 | 1,0 bis 1,4 kg/m² |
| Gesteinskörnung 5/8 mm | 9 bis 15 kg/m² |

2. Doppelte Oberflächenbehandlung
Erste Schicht:

| | |
|---|---|
| Polymermodifiziertes Fluxbitumen gemäß einem der vorhergehenden Beispiele 1 bis 5 | 0,7 bis 1,3 kg/m² |
| Gesteinskörnung 8/11 mm | 10 bis 13 kg/m² |

Zweite Schicht:

| | |
|---|---|
| Polymermodifiziertes Fluxbitumen gemäß einem der vorhergehenden Beispiele 1 bis 5 | 1,3 bis 1,8 kg/m² |
| Gesteinskörnung 5/8 mm | 11 bis 14 kg/m² |

## Patentansprüche

1. Bitumenhaltiges Bindemittel mit einer Bitumenbasis und einem Fluxmittel
**dadurch gekennzeichnet,**
**dass** das Fluxmittel ein reaktives Fluxmittel ist, das ausgewählt ist unter Cashew Nutshell Liquid, Cardol und Cardanol.

2. Bitumenhaltiges Bindemittel nach Anspruch 1,
**dadurch gekennzeichnet,**
**dass** der Gehalt an reaktiven Fluxmittel in dem bitumenhaltigen Bindemittel 0,5 bis 25 Masse-% bezogen auf das einsatzfertige bitumenhaltige Bindemittel beträgt.

3. Bitumenhaltiges Bindemittel nach einem der vorhergehenden Ansprüche,
**dadurch gekennzeichnet,**
**dass** das bitumenhaltige Bindemittel zusätzlich wenigstens eine einfach oder mehrfach ungesättigte Fettsäure und / oder ein Öl, dass wenigstens eine einfach oder mehrfach ungesättigte Fettsäure enthält, enthält.

4. Bitumenhaltiges Bindemittel nach Anspruch 3,
**dadurch gekennzeichnet,**
**dass** die wenigstens eine Fettsäure ausgewählt ist unter Ölsäure, Linolsäure, Linolensäure und Elaeostearinsäure.

5. Bitumenhaltiges Bindemittel nach Anspruch 3,
**dadurch gekennzeichnet,**
**dass** das Öl ausgewählt ist unter Rapsöl, Sojaöl, Diestelöl, Leinöl und Holzöl.

6. Verfahren zur Oberflächenbehandlung von Straßen, **dadurch gekennzeichnet,**
**dass** ein bitumenhaltiges Bindemittel eingesetzt wird, wobei einer Bitumenbasis ein reaktives Fluxmittel zugesetzt wird, das ausgewählt ist unter Cashew Nutshell Liquid, Cardol und Cardanol.

7. Verfahren nach Anspruch 6,
**dadurch gekennzeichnet,**
**dass** ein bitumenhaltiges Bindemittel eingesetzt wird, das zusätzlich wenigstens eine einfach und/oder mehrfach ungesättigte Fettsäure enthält.

8. Verfahren nach Anspruch 7,
**dadurch gekennzeichnet,**
**dass** die wenigstens eine Fettsäure ausgewählt wird unter Ölsäure, Linolsäure, Linolensäure und Elaeostearinsäure.

9. Verwendung eines bitumenhaltigen Bindemittels gemäß einem der Ansprüche 1 bis 5 im Straßenbau zur Herstellung von Asphaltbelägen.

10. Verwendung eines bitumenhaltigen Bindemittels gemäß Anspruch 9 für Oberflächenbehandlungen, Asphaltmischsystemverfahren und Emulsionsverfahren.

11. Bitumenemulsion, enthaltend ein bitumenhaltiges Bindemittel nach einem der Ansprüche 1 bis 5.
